Europäisches Patentamt

European Patent Office

Office européen des brevets

(11) Veröffentlichungsnummer: **0 256 560 B1**

(12) **EUROPÄISCHE PATENTSCHRIFT**

(45) Veröffentlichungstag der Patentschrift: **07.08.91**

(21) Anmeldenummer: **87112032.5**

(22) Anmeldetag: **19.08.87**

(51) Int. Cl.⁵: **A21D 2/18, A21D 13/02**

(54) Backware und Verfahren zu deren Herstellung.

(30) Priorität: **19.08.86 DE 3628019**

(43) Veröffentlichungstag der Anmeldung:
**24.02.88 Patentblatt 88/08**

(45) Bekanntmachung des Hinweises auf die
Patenterteilung:
**07.08.91 Patentblatt 91/32**

(84) Benannte Vertragsstaaten:
**BE CH FR IT LI LU**

(56) Entgegenhaltungen:
**EP-A- 0 022 901**
**EP-A- 0 029 478**
**FR-E- 20 568**
**US-A- 4 544 564**

(73) Patentinhaber: **Ferrero oHG mbH**

**W-3570 Stadtallendorf 1(DE)**

(72) Erfinder: **Der Erfinder hat auf seine Nennung
verzichtet**

(74) Vertreter: **Hansen, Bernd, Dr.rer.nat. et al
Hoffmann, Eitle & Partner Patentanwälte Arabellastrasse 4 Postfach 81 04 20
W-8000 München 81(DE)**

**Beschreibung**

Die Erfindung betrifft eine Backware mit einem Gehalt an Zucker, Mehl und/oder anderen Stärkekomponenten, Eipulver und Fettkomponenten, ausgehend von einer wässrigen Zuckerlösung, sowie ein Verfahren zur Herstellung derselben. Insbesondere betrifft die Erfindung ein Verfahren zur Herstellung sogenannter Wiener Massen auf industrieller Basis.

Üblicherweise werden Wiener Massen auf industrieller Basis dadurch hergestellt, dass zunächst Zucker in Wasser gelöst, und in der entstandenen wässrigen Zuckerlösung dann die proteinhaltigen Zutaten, insbesondere Eipulver, gelöst werden. Die so erhaltene Masse wird dann mit dem Fett oder der Fettzubereitung sowie dem Mehl vermischt. Dabei sind relativ lange Mischzeiten erforderlich, nämlich ca. 5 Minuten bei 30 bis 35° C, um den Zucker im Wasseraufzulösen. Daraufhin erfordert das Einmischen des Eipulvers als Proteinträger ein weiteres Rühren von 10 Minuten, und anschliessend werden die weiteren Zutaten, wie Fette, Weizenmehl, Lactovit, der Masse zugegeben und das Ganze nochmal 10 bis 15 Minuten verrührt. Somit ist insgesamt eine Rührzeit von mindestens 25 Minuten erforderlich.

Ein Nachteil dieses Verfahrens besteht darin, dass beim Zusatz von Mehl und anderen Stärkekomponenten sich dieselben ziemlich stark mit Wasser vollsaugen, und dass dadurch die Teigführung erschwert wird. Getreiderohstoffe, die noch Schalenteile enthalten, oder die nur aus Schalenteilen bestehen, erfordern vor ihrer Verarbeitung zu einer Backware im allgemeinen die Durchführung eines Quellprozesses. Dazu wird der Getreiderohstoff mit heissem Wasser übergossen und so lange aufgequollen, bis die Getreideschalenteile soweit aufgeweicht sind, dass sie im Teig kein zusätzliches Wasser absorbieren.In neuerer Zeit ist es aus ernährungsphysiologischen Gründen besonders wünschenswert, einer Backware z.B. Weizenkleie zuzugeben. Weizenkleie neigt aber in besonserem Masse dazu, in Gegenwart grösserer Mengen Wasser dasselbe aufzunehmen und es dann im späteren Backvorgang nur sehr langsam wieder abzugeben.

Ausserdem ist Weizenkleie ein Naturstoff, der bakteriologisch stark belastet ist. Die Haltbarkeit einer Backware hängt aber davon ab, inwieweit eine bakteriologische Kontamination der Rohstoffe vorliegt. In der Regel ist es durch den Backprozess allein nicht möglich, alle Keime restlos durch die Hitzeeinwirkung zu vernichten. Aus diesem Grunde ist es wesentlich, ein Kleierohprodukt einzusetzen, das zur Reduzierung seiner bakteriologischen Kontamination vorbehandelt ist.

Ausserdem enthält Weizenkleie lipolytische Enzyme, was normalerweise ihre Verarbeitung in fetthaltigen Backwaren, wie sie Wiener Massen darstellen, ausschliesst. Aus diesem Grunde ist es erforderlich, die Adsorption von Wasser in Weizenkleie weitgehend zu unterbinden, um damit auch die lipolytische Aktivität derselben auszuschalten.

Aufgabe der vorliegenden Erfindung ist es, eine Backware zur Verfügung zu stellen, die nach einem Verfahren erhältlich ist, das gegenüber den herkömmlichen deutlich verkürzte Rührzeiten erfordert; ausserdem soll es möglich sein, Stärkekomponenten, wie z.B. Weizenkleie, in der Backware zu verarbeiten, ohne dass sich dieselben während des Zubereitungsvorganges zu stark voll Wasser saugen, bzw. zuviel Feuchtigkeit aufnenmen; im übrigen soll durch die Kombination der zur Herstellung der Backware erforderlichen Verfahrensschritte die Aktivität der lipolytischen Enzyme weitgehend ausgeschaltet werden. Im weiteren soll eine Backware zur Verfügung gestellt werden, die ohne Einsatz von Konservierungsmitteln über längere Zeit haltbar ist.

Die vorstehende Aufgabe wird gemäss der Erfindung durch die eingangs genannte Backware gelöst, die nach folgenden Herstellungsstufen erhältlich ist: ·

(a) Herstellen einer Lösung aus $H_2O$, Zucker und Kochsalz,

(b) trockenes Vormischen von Ballaststoff, Mehl und/oder anderen Stärkekomponenten, Eipulver, Treibmittel und Aromen, und

(c) Zugabe der letzteren zu der in Stufe (a) erhaltenen Lösung unter gleichzeitigem Zudosieren der Fettkomponenten unter Rühren bis zum Erhalt einer homogenen Teigmasse,

(d) Ausbacken der Teigmasse bei einer Temperatur von 150 bis 220 C bis zu einem Restfeuchteanteil von 18 bis 22 %.

Zur Herstellung der erfindungsgemässen Backware erfolgt in Schritt (a) unter 5-minütigem Rühren, in an sich bekannter Weise, die Auflösung des Zuckers und Kochsalzes in der zur Teigherstellung erforderlichen Menge an Wasser, was bevorzugt bei einer Temperatur von 40° C erfolgt.

Im Unterschied zu den bisher vorgenommenen Verfahrensschritten, werden dann gemäss der Erfindung der Ballaststoff, das Mehl und/oder die anderen Stärkekomponenten, das Eipulver, das Treibmittel und die Aromen trocken vorgemischt. In Schritt (c) wird diese trockene Vormischung zu der in Stufe (a) erhaltenen Lösung zugegeben, wobei gleichzeitig die Fettkomponenten in die Mischung mit eingerührt werden. Das Rühren wird so lange fortgesetzt, bis eine homogene Teigmasse erhalten wird. Hierfür sind in der Regel 10 bis 15 Minuten Rührzeit erforderlich, bevorzugt bei einer Temperatur von 30 bis 35° C.

2

Die erhaltene, homogene Teigmasse wird dann in Schritt (d) nach Aufbringen auf ein Backblech bei einer Temperatur von 150 bis 220° C bis zu einem Restfeuchteanteil von 18 bis 22%, vorzugsweise 18 bis 20%, ausgebacken. Es ist bevorzugt, diesen Ausbackvorgang in ein bis vier Temperaturzonen vorzunehmen.

Gemäss der Erfindung ist es bevorzugt, den Mehlanteil durch Stärkekomponenten teilweise zu ersetzen. Hierfür eignen sich insbesondere Weizenkleie, besonders bevorzugt thermisch behandelte, getoastete Weizenkleie. Während nach üblichen Verfahren die Weizenkleie sowie andere Getreiderohstoffe, die Schalenteile enthalten, oder aus Schalenteilen bestehen, erst vorgequollen werden müssen, ist es gemäss der Erfindung möglich, diese Vorbereitung zu umgehen. Der Anteil an Weizenkleie kann bis zu 100 % der Stärkekomponenten betragen; bevorzugt ist ein Anteil von 30 bis 80%, besonders bevorzugt von 50 %. Es ist besonders bevorzugt, thermisch behandelte Kleie einzusetzen, da dadurch die bakteriologische Belastung durch dieselbe weitestgehend reduziert wird. Bei dieser thermischen Behandlung werden auch Enzyme zerstört, so dass sich auch auf diese Weise eine erhöhte Haltbarkeit ergibt. Diese verbesserte Haltbarkeit ist nicht nur im Hinblick auf die hier beanspruchte Backware von Bedeutung, sondern insbesondere dann, wenn diese Backware zusammen mit einer Cremefüllung verarbeitet wird, da dann aufgrund des relativ hohen Feuchtigkeitsgehaltes des Gesamtproduktes eine Verringerung der bakteriologischen Belastung sowie auch eine Reduzierung des enzymatischen Abbaus besonders wichtig ist.

Als weitere Komponenten werden in Stufe (b) Hilfsstoffe und Aromen zugegeben; z.B. Colco, Nutex, Lactovit, sowie Treibmittel. Colco stellt einen Emulgator aus Mono- und Diglyceriden (E 471) dar; Nutex ist ein Palmöl und Lactovit stellt ein Milchprotein in Pulverform dar.

Die Fettkomponente kann aus üblicherweise verwendeten Backfetten sowie Butter bestehen. Besonders geeignet sind flüssige Fette, insbesondere Erdnussöl und Palmöl. Als Eipulver eignet sich besonders Volleipulver, das gegebenenfalls durch einen Anteil an Eigelbpulver ergänzt wird.

Das gebackene Enderzeugnis weist einen Restfeuchteanteil von 18 bis 22%, vorzugsweise von 18 bis 20 %, besonders bevorzugt von 19%, auf. Es hat eine Wasseraktivität von 0,5 bis 0,8; trotzdem verfügt es ohne den Einsatz von Konservierungsstoffen über eine langdauernde Haltbarkeit, die bis zu 50 bis 90 Tagen geht.

Das folgende Beispiel soll die Erfindung erläutern, ohne diese zu beschränken.

## Ausführungsbeispiel

Die eingesetzten Rohstoffmengen der erfindungsgemässen Backware betragen z.B.:

| | |
|---|---|
| **Mehl** | **25 %** |
| **Eipulver** | **10 %** |
| **Saccharose** | **12-15 %** |
| **Fettanteil** | **14 %** |
| **Wasseranteil** | **39-42%** |

Stufe (a):

Die gewogenen Anteile an Zucker, Wasser und Salz werden in den Löser eingegeben. Der Löser ist doppelwandig ausgeführt, mit 80° C Wasser beheizbar und mit einem Rührwerk versehen. Alle Teile bestehen aus rostfreiem $V_2$A-Stahl. Die vorstehend genannten Rohstoffe werden unter Rühren bis auf 40° C erwärmt, bis Zucker und Salz vollkommen gelöst sind.

Eine derartige Lösung kann auch auf Vorrat für weitere Mischungen vorbereitet werden.

Der rezepturmässig vorgesehene Anteil der Lösung wird dann in den eigentlichen Mischbehälter gepumpt. Dieser Mischbehälter ist ebenfalls doppelwandig ausgeführt, mit Wasser beheizbar, mit einem Planetenrührwerk ausgestattet und komplett mit Zu- und Ableitungen aus rostfreiem Stahl hergestellt. Das Planetenrührwerk besitzt zwei Geschwindigkeitseinstellungen, i.e. a) 35/87,5 UpM, b) 70/175 UpM.

Stufe (b):

Mehl, Eigelbpulver, Volleipulver, getoastete Weizenkleie (Cruschello medio), Lactovit, Backpulver, Ammoniumcarbonat, Vanillin werden trocken vorgemischt.

Stufe (c):

In die in Stufe (a) genannte Lösung wird das vorstehend erhaltene Trockengemisch eingerührt. Direkt nach Zugabe der Trockenkomponenten wird auch der gewogene Anteil an Colco, Nutex und Orangen-Essenz zugefügt, und die gesamte Teigmasse solange gemischt, bis eine glatte, klumpenfreie Mischung entstanden ist. Gleichzeitig werden der Teigmasse die Fettkomponenten, vorzugsweise Erdnussöl, zugemischt. Der Rührvorgang dauert in dieser Stufe ca. 10 bis 15 Minuten.

Die Rührintensität wird so gewählt, dass eine mögliche Klumpenbildung vermieden wird. Die Temperatur der erhaltenen Mischung liegt dabei bei 32° C ± 2° C. Diese Temperatur ist das Endergebnis aus Rohstofftemperatur und Lösungstemperatur von Stufe (a). Je nach vorhandener Rohstofftemperatur wird mit der Lösungstemperatur die Endtemperatur der Mischung eingestellt. Korrekturen nach oben werden mit Hilfe der indirekten Beheizung durchgeführt.

Stufe (d):

Die so erhaltene Teigmasse, die ein spezifisches Gewicht von 0,95 bis 1,10 aufweist, wird in den Pufferbehälter, der sich vor dem Ofen befindet, gepumpt. Dieser Pufferbehälter ist genauso gebaut wie der Mischbehälter, weist allerdings ein langsameres Rührwerk auf, das die Teigmasse in Bewegung hält. Die Temperatur wird auch hier weiter auf 32° C gehalten.

Von hier wird die Masse nach Bedarf in die Auftragwanne gepumpt. Ein Sieb in dieser Zuleitung entfernt eventuelle Fremdkörper und Klumpen. Ein sich nach links und rechts bewegendes Endstück der Zuleitung in der Auftragwanne versorgt den Auftrag mit frischer Teigmasse über die gesamte Auftragsbreite, so dass sich an den Aussenseiten des Bandes keine "überaltete" Teigmasse bilden kann. Die Auftragshöhe beträgt ca. 2 mm und wird über ein fein regulierbares Abstreifsystem manuell eingestellt. Die Einstellhöhe richtet sich nach der gewünschten Höhe der Backware.

Die so auf das Stahlband aufgetragene Teigmasse durchläuft den Backofen, der in zwei Zonen aufgeteilt ist, die separat temperiert werden können. Der Backofen wird nach dem bekannten Heissluftumwälzungssystem beheizt. Prinzipiell ist es möglich, den Backofen in bis zu vier Zonen aufzuteilen; die Temperatur und Anzahl der Zonen richten sich nach der Durchlaufgeschwindigkeit.

Die Kerntemperatur des gebackenen Produktes muss mindestens 95° C erreichen.

Der Restfeuchteanteil der Backware liegt bei 19 % ± 1 %; die gebackene Höhe bei 3,5 mm ± 0,1 mm; das spezifische Gewicht bei 0,37 ± 0,03.

Die Backtempeaturen betragen in dem vorliegenden Ausführungsbeispiel bei einer Geschwindigkeit von 3 m/min.: in der ersten Zone: oben 150° C, unten 210° C; in der zweiten Zone: oben 220° C; unten 220° C.

Die so erhaltene Backware, die im vorliegenden Fall ein Halbfabrikat darstellt, wird nach Passieren des Backofens mittels eines Abschabesystems vom Stahlband gelöst. Dabei muss die untere Backhaut am Stahlband kleben bleiben; sie darf nicht am Produkt haften. Die Backhaut wird später durch ein Reinigungsverfahren vom Stahlband entfernt und als Abfall beseitigt.

Das Backprodukt wird zum Auskühlen auf einem Kettenband durch eine klimatisierte, mit Sterilluft versorgte Zone weiter befördert.

Über eine Rolle wird das Endlos-Bisquitband mit der Backunterseite nach oben gewendet, in Streifen gewünschter Breite geschnitten und zur Dosierung der Füllcreme transportiert.

Das erhaltene Backprodukt weist die in der nachfolgenden Tabelle zusammengestellten Daten auf:

## Tabelle

| Merkmale | Wiener Masse ungebacken | Wiener Masse gebacken |
|---|---|---|
| pH | 7,0 - 7,3 | 7,3 - 7,7 |
| Wassergehalt | 39 - 42 % | 18 - 20 % |
| Gesamteiweiss | 6,0 - 7,0 % | 6,5 - 8,5 % |
| Gesamtfett | 14,0 - 16,0 % | 16,0 - 18,0% |
| Viskosität 351 | * 2,5 - 3,6 mPa.s | - |
| 251 | * 3,7 - 4,2 mPa.s | - |
| AW-Wert *** | 0,92 - 0,95 | 0,75 - 0,80 |
| Dichte | 0,99 ± 0,02 | 0,37 ± 0,03 |
| Saccharose | 13 - 15 % | 15,0 - 17,0% |
| Penetrometrie | - | ** 0,4 - 0,7 mm |
| Ballaststoffe | - | 3,5% |

Anmerkung: * Brookfield Spindel RV 6 Geschw. 50

** Penetrometrie SUR - PNR 8 Prüfstempel
Gesamtgewicht 215 gr (Deut. Prüfvorschrift
18.242.1)

*** Die Verfügbarkeit des Wasser in einem Wasserhaltigem Medium für chemische und microbiellenzymatische Reaktion.

Registrierte Schutzmarken werden als anerkannt.

### Patentansprüche

1. Backware mit einem Gehalt an Zucker, Mehl und/oder anderen Stärkekomponenten, Eipulver und Fettkomponenten, ausgehend von einer wässrigen Zuckerlösung, dadurch **gekennzeichnet**, dass die Backware durch folgende Herstellungsstufen erhältlich ist:
   (a) Herstellen einer Lösung aus $H_2O$, Zucker und Kochsalz,
   (b) trockenes Vormischen von Ballaststoff, Mehl und/oder anderen Stärkekomponenten, Eipulver, Treibmittel und Aromen, und
   (c) Zugabe der letzteren zu der in Stufe (a) erhaltenen Lösung unter gleichzeitigem Zudosieren der Fettkomponenten unter Rühren bis zum Erhalt einer homogenen Teigmasse,
   (d) Ausbacken der Teigmasse bei einer Temperatur von 150 bis 220° C bis zu einem Restfeuchteanteil von 18 bis 22 %.

2. Backware nach Anspruch 1, dadurch **gekennzeichnet**, dass als Eipulver Volleipulver und/oder Eigelbpulver verwendet wird.

3. Backware nach Anspruch 1, dadurch **gekennzeichnet,** dass als Ballaststoff und als Stärkekomponente Weizenkleie verwendet wird.

4. Backware nach Anspruch 3, dadurch **gekennzeichnet**, dass getoastete, thermisch behandelte Weizenkleie verwendet wird.

**5.** Backware nach Ansprauch 1, dadurch **gekennzeichnet**, dass in der Stufe (c) weitere Hilfsstoffe und Geschmacksmittel zugegeben werden

**6.** Backware nach Anspruch 5, dadurch **gekennzeichnet**, dass in der Stufe (c) Mono-/Diglycerid-Emulgator (Colco), Palmöl (Nutex) und Milchproteinpulver (Lactovit) zugegeben werden.

**7.** Backware nach Anspruch 1, dadurch **gekennzeichnet**, dass in flüssiger Form vorliegende Fettkomponenten zugegeben werden.

**8.** Backware nach Anspruch 7, dadurch **gekennzeichnet**, dass Erdnußöl zugegeben wird.

**9.** Backware nach Anspruch 1, dadurch **gekennzeichnet**, dass die Restfeuchte 18 bis 20 % beträgt.

**10.** Backware nach Anspruch 1, dadurch **gekennzeichnet**, dass die Rührzeiten in Stufe (a) 5 Minuten, in Stufe (c) 10 bis 15 Minuten betragen.

**11.** Backware nach Anspruch 1, dadurch **gekennzeichnet**, dass die Temperaturen in Stufe (a) 40° C, in Stufe (c) 30 bis 35° C betragen.

**12.** Backware nach Anspruch 1, dadurch **gekennzeichnet**, dass das Ausbacken in Stufe (d) in zwei Zonen mit jeweils 150 bis 210° C und 220° C erfolgt.

**13.** Verfahren zur Herstellung einer Backware gemäss Anspruch 1, **gekennzeichnet** durch die Folge von Herstellungsstufen gemäss Ansprüchen 1 bis 12.

**Claims**

**1.** Baking product with a content of sugar, flour and/or other starch components, egg powder and fat components, starting with an aqueous sugar solution, characterised in that the baking product can be obtained through the following manufacturing stages:
(a) Producing a solution of $H_2O$, sugar and common salt,
(b) Pre-mixing in the dry state ballast material, flour and/or other starch components, egg powder, leavening agents and aromas, and
(c) Adding the latter to the solution obtained in stage (a) while at the same time measuring-in the fat components whilst stirring until a homogenous dough mass is obtained,
(d) Baking the dough mass at a temperature of 150 to 220° until reaching a residual moisture content of 18 to 22%.

**2.** Baking product according to claim 1, characterised in that the egg powder used is whole egg powder and/or egg yoke powder.

**3.** Baking product according to claim 1, characterised in that wheat bran is used as the ballast material and the starch component.

**4.** Baking product according to claim 3, characterised in that the toasted, heat treated wheat bran is used.

**5.** Baking product according to claim 1, characterised in that further additives and flavouring agents are added in stage (c).

**6.** Baking product according to claim 5, characterised in that mono-/diglyceride-emulsifier (Colco), palm oil (Nutex) and milk protein powder (Lactovit) are added in stage (c).

**7.** Baking product according to claim 1, characterised in that fat components in the liquid state are added.

**8.** Baking product according to claim 7, characterised in that ground nut oil is added.

**9.** Baking product according to claim 1, characterised in that the residual moisture content is 18 to 20%.

**10.** Baking product according to claim 1, characterised in that the stirring in stage (a) takes place for 5 minutes, in stage (c) 10 to 15 minutes.

**11.** Baking product according to claim 1, characterised in that the temperature in stage (a) is 40° C, in stage (c) 30 to 35° C.

**12.** Baking product according to claim 1, characterised in that the baking in stage (d) takes place in two zones at 150 to 210° C and 220° C respectively.

**13.** Method for manufacturing a baking product according to claim 1, characterised by the sequence of manufacturing stages according to claims 1 to 12.

**Revendications**

**1.** Produit de boulangerie contenant du sucre, de la farine et/ou d'autres composants amidon, de la poudre d'oeufs et des graisses obtenu à partir d'une solution aqueuse de sucre, **caractérisé** en ce que le produit de boulangerie est obtenu par les étapes de fabrication suivantes :
(a) production d'une solution de $H_2O$, sucre et sel de cuisine,
(b) mélange à sec de produits de stabilisation, de farine et/ou d'autres composants amidon, de poudre d'oeufs de levain et d'aromes, et
(c) incorporation de ceux-ci dans la solution obtenue à l'étape (a) avec addition simultanée des graisses en mélangeant jusqu'à obtention d'une pâte homogène,
(d) cuisson de la pâte à une température comprise entre 150 et 220° C jusqu'à obtention d'une teneur en humidité résiduelle comprise entre 18 et 22%.

**2.** Produit de boulangerie selon la revendication 1, **caractérisé** en ce qu'on utilise comme poudre d'oeufs de la poudre d'oeufs complets et/ou de la poudre de jaunes d'oeufs.

**3.** Produit de boulangerie selon la revendication 1, **caractérisé** en ce qu'on utilise du son de froment comme produit de stabilisation et comme composant amidon.

**4.** Produit de boulangerie selon la revendication 3, **caractérisé** en ce qu'on utilise du son de froment traité thermiquement et grillé.

**5.** Produit de boulangerie selon la revendication 1, **caractérisé** en ce que dans l'étape (c), on ajoute d'autres adjuvants et des aromes.

**6.** Produit de boulangerie selon la revendication 5, **caractérisé** en ce que, dans l'étape (c), on ajoute un émulsifiant à base de mono-/diglycéride (colco), de l'huile de palme (nutex) et de la poudre de protéine du lait (lactovit).

**7.** Produit de boulangerie selon la revendication 1, **caractérisé** en ce qu'on ajoute les graisses utilisées sous forme liquide.

**8.** Produit de boulangerie selon la revendication 7, **caractérisé** en ce qu'on ajoute de l'huile d'arachide.

**9.** Produit de boulangerie selon la revendication 1, **caractérisé** en ce que l'humidité résiduelle représente 18 à 20%.

**10.** Produit de boulangerie selon la revendication 1, **caractérisé** en ce que les temps de mélange sont, pour l'étape (a) 5 minutes, pour l'étape (c) 10 à 15 minutes.

**11.** Produit de boulangerie selon la revendication 1, **caractérisé** en ce que les températures sont, pour l'étape (a) 40° C, pour l'étape (c) 30 à 35° C.

**12.** Produit de boulangerie selon la revendication 1, **caractérisé** en ce que la cuisson au cours de l'étape (d) est réalisée dans deux zones respectivement à 150 - 210° C et 220° C.

13. Procédé de fabrication d'un produit de boulangerie selon la revendication 1, **caractérisé** par la succession des étapes de fabrication selon les revendications 1 à 12.